# EUROPÄISCHE PATENTANMELDUNG

(11) **EP 2 538 130 A1**
(43) Veröffentlichungstag der Anmeldung: **26.12.2012**
(21) Anmeldenummer: 12173098.0
(22) Anmeldetag: 22.06.2012
(51) Int. Cl.: F21V 8/00

(54) **Optisches System mit einer Lichteinkopplung von Licht punktförmiger Lichtquellen in einen flächigen Lichtleiter**

(30) Priorität: 25.06.2011 DE 102011105571
(71) Anmelder: Heße, Andreas, 57482 Wenden-Gerlingen (DE)
(72) Erfinder: Heße, Andreas, 57482 Wenden-Gerlingen (DE)
(74) Vertreter: Lippert, Stachow & Partner

(57) **Zusammenfassung**

Die Erfindung betrifft ein optisches System zur Einkopplung von Licht von zumindest einer näherungsweise punktförmigen Lichtquelle wie einer LED in einen Flächenlichtleiter aus transparentem Material wie Glas oder Kunststoff. Das erfindungsgemäße System zeichnet sich dadurch aus, dass die punktförmige Lichtquelle über einer Fläche des Flächenlichtleiters angeordnet und dieser ein optisches Element zugeordnet ist, welches das Licht der punktförmigen Lichtquelle an der Fläche des Flächenlichtleiters einkoppelt, wobei das eingekoppelte Licht den Grenzwinkelbedingungen der Totalreflexion genügt und bis zur kontrollierten Auskoppelung im Flächenlichtleiter verbleibt.

## Beschreibung

Die Erfindung betrifft ein optisches System mit einer Einkopplung von Licht von zumindest einer nährungsweise punktförmigen Lichtquelle, wie einer LED, in einen Flächenlichtleiter aus transparentem Material wie Glas oder Kunststoff.

Ausgehend von der Verwendung von LEDs für rein optische Anzeigefunktionen hat sich deren Einsatz hin zu Leuchtmitteln in leistungsfähigen Leuchten entwickelt, was im Wesentlichen den technischen Verbesserungen bezüglich der Leuchtkraft der LEDs geschuldet ist. Auch wenn diese LEDs zwischenzeitlich sehr leistungsfähig und preiswert geworden sind, handelt es sich mit Ausnahme der OLEDs bei den LEDs immer um extrem intensiv leuchtende Punktlichtquellen, welche allein aufgrund der damit verbundenen Leuchtdichte kaum unmittelbar in Leuchten einsetzbar sind. In der Regel werden derartige Leistungs-LEDs entweder mit Kollimatoren zur Strahlfokusierung, mit opal transluzenten Diffusionsoptiken oder mit stirnseitigen Einkopplungen in Linien- oder Flächenlichtleitern integriert eingesetzt, um die bereitgestellte Lichtenergie zu homogenisieren.

Insbesondere die Einkopplung von LED-Licht in Linien- bzw. Flächenlichtleiter hat sich als vorteilhaft herausgestellt, da ein solches Vorgehen den Wunsch der Leuchtenkonstrukteure nach homogen leuchtenden Flächen und hoher Effizienz der Leuchte unterstützt. Bei der herkömmlichen Einkopplung von Licht in den Lichtleiter wird das Licht einer oder mehrerer LEDs in die meist poliert und/oder linsenförmig konvex ausgestellten Stirnseiten des Lichtleiters eingekoppelt. Eine solche Einkopplung an der Stirnseite des Lichtleiters weist jedoch aufgrund der Absorption des Lichtes im Material und der damit verbundenen Inhomogenität der Lichtintensität innerhalb des Lichtleiters Nachteile auf, wodurch die Effizienz und die Größe eines sinnvoll einsetzbaren Flächenlichtleiters begrenzt ist.

Der Erfindung liegt die Aufgabe zugrunde, den beschriebenen Nachteil herkömmlicher optischer Systeme mit einer Einkopplung von Licht von Punktlichtquellen in einen Flächenlichtleiter zu verbessern. Diese Aufgabe löst die Erfindung überraschenderweise schon mit einem optischen System mit den Merkmalen von Anspruch 1. Dabei zeichnet sich das erfindungsgemäße System dadurch aus, dass die punktförmige Lichtquelle über einer Fläche des Flächenlichtleiters angeordnet ist und dieser ein optisches Element zugeordnet ist, welches das Licht der punktförmigen Lichtquelle an der Fläche des Flächenlichtleiters einkoppelt, wobei das eingekoppelte Licht den Grenzwinkelbedingungen der Totalreflexion genügt und bis zur kontrollierten Auskopplung im Flächenlichtleiter verbleibt. Der Begriff "Fläche des Flächenlichtleiters" meint dabei nicht eine Stirnseite sondern eine Hauptfläche des Flächenlichtleiters, welche beispielsweise bei einem rechteckförmigen Flächenlichtleiter durch die Breite und Länge des Lichtleiters festgelegt wird. Dessen Dicke ist dabei kleiner oder sehr viel kleiner als die besagte Breite bzw. Länge. Die beiden Hauptflächen oder Flächen eines plattenförmigen Lichtleiters entsprechen somit den beiden größten, sich gegenüberliegenden Begrenzungsflächen des Flächenlichtleiters.

Dadurch, dass das Licht der zumindest einen Punktlichtquelle nicht an der äußeren Stirnseite des Flächenlichtleiters, sondern an einer seiner beiden Flächen eingekoppelt wird, kann innerhalb des Flächenlichtleiters eine homogenere Lichtverteilung bereitgestellt werden, auch wenn bei dem erfindungsgemäßen optischen System je nach Absorption des Lichtes die Dichte ausgehend vom Einkoppelort wie bei herkömmlichen Flächenlichtleitern abnimmt. Das erfindungsgemäße System weist zur Lichteinkopplung für jede punktförmige Lichtquelle ein dieser zugeordnetes optisches Element auf, welches das Licht der zugeordneten punktförmigen Lichtquelle an einer (Haupt-)Fläche des Flächenlichtleiters einkoppelt, derart, dass das eingekoppelte Licht den Grenzwinkelbedingungen der Totalreflexion genügt und bis zum kontrollierten Austritt im Flächenlichtleiter verbleiben kann. Eine derartige kontrollierte Auskopplung kann beispielsweise über eine Strukturierung wie eine Aufrauhung eines entsprechenden Bereichs einer (Haupt-)Fläche des Flächenlichtleiters eingestellt sein. Erfindungsgemäß werden Lichtstrahlen von oberhalb einer (Haupt-)Fläche des Flächenlichtleiters in diesen mittels des bzw. der optischen Elemente eingekoppelt.

Für die Gestaltung eines solchen optischen Elements zur Einkopplung von Licht einer punktförmigen Lichtquelle an einer Fläche des Flächenlichtleiters sind mehrere unterschiedliche Gestaltungen möglich. Beispielsweise können in den Flächenlichtleiter eingearbeitete, der betreffenden Punktlichtquelle zugewandte und zur betreffenden Hauptfläche des Flächenlichtleiters vertieft angeordnete Einkoppelflächen vorgesehen sein, über welche Licht der Punktlichtquelle über eine Brechung des Lichtes an den vertieft angeordneten Einkoppelflächen in den Flächenlichtleiter eintritt. Diese Einkoppelflächen können je nach spezifischer Ausführungsform eben oder auch gekrümmt ausgebildet sein. Um diese Einkoppelflächen zu maximieren, können diese sich über einen Großteil der Höhe des Flächenlichtleiters strecken, insbesondere als Grenzflächen einer Ausnehmung im Flächenlichtleiter, welche kegelförmig gestaltet ist.

In einer weiteren Ausführungsform der Erfindung kann auch vorgesehen sein, dass eine solche Vertiefung, beispielsweise in Form einer kegelförmigen Ausnehmung nicht an der Fläche des Flächenlichtleiters angeordnet ist, welche der Lichtquelle zugewandt ist, sondern an der gegenüber liegenden Fläche. Durch eine derartige Vertiefung im Flächenlichtleiter wird zumindest eine Koppelfläche in diesem erzeugt, welche das Licht der Punktlichtquelle mittels Totalreflexion in den Flächenlichtleiter hinein reflektiert. Dabei kann auch vorgesehen sein, dass die Flächen der Vertiefung verspiegelt sind oder weitere Spiegelelemente in der Vertiefung angeordnet sind, um Licht, ausgehend von dem zugeordneten Punktlichtstrahler, das an der gegenüber liegenden Fläche des Flächenlichtstrahlers in diesen eindringt, in eine Richtung zwischen die beiden Flächen des Flächenlichtleiters zu reflektierten, wobei das Licht mittels Totalreflexion an den beiden Flächen im Flächenlichtleiter solange verbleibt, bis es an Auskoppelbereiche des Flächenlichtleiters gelangt, wo es den Flächenlichtleiter verlässt.

Die besagten Vertiefungen im Flächenlichtleiter bei den beschriebenen beiden Ausführungsformen bzw. die durch diese Vertiefungen erzeugten Einkoppelflächen können zweckmäßigerweise zur Optimierung der Einkopplung an die jeweilige Gestalt der Lichtquelle angepasst sein.

In einer weiteren Ausführungsform des erfindungsgemäßen optischen System kann zur Gestaltung des einkoppelnden optischen Elements vorgesehen sein, dass auf der der jeweiligen Punktlichtquelle zugewandten Fläche des Flächenlichtleiters zumindest eine lokale Erhebung des Lichtleiters ausgestellt ist, welche mittig eine kegelförmige Vertiefung aufweist, über deren Begrenzungsfläche das Licht der punktförmigen Lichtquelle eingekoppelt wird.

Darüber hinaus kann auch vorgesehen sein, dass zur Gestaltung eines solchen einkoppelnden optischen Elements in der Fläche des Flächenlichtleiters eine Öffnung, beispielsweise in Form eines Lochs vorgesehen ist, in welchem ein Spiegelelement, beispielsweise in Form eines Kegels mit spiegelnder Kegelmantelfläche angeordnet ist, wobei dieses Spiegelelement das senkrecht zur Fläche der Flächenlichtleiters einfallende Licht der punktförmigen Lichtquelle in den Flächenlichtleiter an der die besagte Öffnung festlegenden Stirnfläche des Flächenlichtleiters einkoppelt.

In einer weiteren Ausführungsform eines erfindungsgemäßen optischen Systems kann auch vorgesehen sein, dass zur Gestaltung eines einkoppelnden optischen Elements zwischen dem Flächenlichtleiter und der punktförmigen Lichtquelle ein Prisma in optischem Kontakt mit einer Fläche des Flächenlichtleiters angeordnet ist, sodass auf der Lichteintrittsseite des Prismas Licht eingeleitet wird, das auf der gegenüber liegenden Seite über den optischen Kontakt zwischen Prisma und Flächenlichtleiter spitzwinklig in den Flächenlichtleiter eintritt.

Besonders zweckmäßig ist es, wenn das erfindungsgemäße System nicht nur zur Einkopplung von Licht eines einzelnen Punktlichtstrahlers, sondern zur Einkopplung von Licht einer Mehrzahl von solchen Punktlichtstrahlern wie LEDs ausgebildet ist. Zweckmäßigerweise umfasst ein derartiges erfindungsgemäß ausgebildetes optisches System für jede dieser punktförmigen Lichtquellen an einer Fläche des Flächenlichtleiters jeweils ein zugeordnetes optisches Element, welches das Licht der zugeordneten Punktlichtquelle wie beschrieben in den Flächenlichtleiter einkoppelt. Die Anordnung der Punktlichtquellen über den Flächenlichtleiter sowie der zugeordneten optischen Elemente kann dabei spezifisch an die jeweilige Beleuchtungsaufgabe angepasst werden. Beispielsweise kann eine solche Mehrzahl von Punktlichtquellen in äquidistantem Abstand über eine Mehrzahl von Reihen und Spalten über einen vorgegebenen Bereich oder die gesamte Fläche des Flächenlichtleiters angeordnet werden mit der Vorteil, dass eine besonders homogene Lichtverteilung hoher Intensität im Lichtleiter erzielt werden kann. Die optischen Elemente eines solchen erfindungsgemäß ausgestalteten optischen Systems zur Einkopplung von Licht einer Mehrzahl von punktförmigen Lichtquellen können wie obenstehend beschrieben ausgebildet sein. Dabei ist es je nach spezifischer Anwendung auch ohne weiteres möglich, mehrere unterschiedlich aufgebauten optischen Elemente in einem einzelnen optischen System zu integrieren, sodass beispielsweise in einem Bereich der Fläche des Flächenlichtleiters das Licht mehrerer Punktlichtquellen über optische Elemente einer Art und in einem anderen Bereich der Fläche des Lichtleiters das Licht anderer Punktlichtquellen über optische Elemente einer anderen Art eingesetzt sind.

Die Erfindung wird im Folgenden durch das Beschreiben einiger Ausführungsformen unter Bezugnahme auf die beiliegenden Figuren erläutert, wobei
- Figur 1: ein erfindungsgemäß ausgebildetes optisches System einer ersten Ausführungsform in einer Schnittdarstellung,
- Figur 2: ein erfindungsgemäß ausgebildetes optisches System einer zweiten Ausführungsform in einer Schnittdarstellung,
- Figur 3: ein erfindungsgemäß ausgebildetes optisches System einer dritten Ausführungsform in einer Schnittdarstellung,
- Figur 4: ein erfindungsgemäß gestaltetes optisches System einer vierten Ausführungsform in einer Schnittdarstellung,
- Figur 5: ein erfindungsgemäß ausgebildetes optisches System einer fünften Ausführungsform in einer Schnittdarstellung und
- Figur 6: ein erfindungsgemäß ausgebildetes optisches System einer sechsten Ausführungsform in einer perspektivischen Ansicht
zeigt.

Das erfindungsgemäße optische System mit einer Einkopplung von Licht von zumindest einer punktförmigen Lichtquelle wie einer LED umfasst zumindest den besagten Flächenlichtleiter und je nach Anzahl der verwendeten Punktlichtquellen eine entsprechende Anzahl von optischen Einkoppelelementen, mit welchen das Licht der zugeordneten Punktlichtquellen an einer Fläche des Flächenlichtleiters in diesen eingekoppelbar ist.

Das in den Flächenlichtleiter eingekoppelte Licht kann dann an beliebiger Stelle einer Hauptfläche des Flächenlichtleiters ausgekoppelt werden, beispielsweise durch eine Aufrauhung oder Strukturierung der Oberfläche, wobei die Auskopplung an der gleichen Hauptfläche wie die beschriebene Einkopplung oder an der gegenüber liegenden Hauptfläche realisiert sein kann. In einer Ausführungsform kann das erfindungsgemäße optische System neben dem Flächenlichtleiter, dem einen bzw. mehreren optischen Einkoppelelement(en) auch die eine bzw. mehrere Punktlichtquelle(n) wie eine oder mehrere LEDs umfassen.

Je nach Ausführungsform ist der zumindest in Bezug auf das von der punktförmigen Lichtquelle emittierte Licht transparente Flächenlichtleiter aus einem Glaswerkstoff oder einem Kunststoff wie Plexiglas aufgebaut. Der Flächenlichtleiter kann plattenförmig ausgebildet sein mit insbesondere einer konstanten Höhe. Der Flächenlichtleiter kann dabei in Bezug eine Hauptfläche zumindest abschnittsweise eben, jedoch auch gekrümmt ausgebildet sein.

Die nachstehend beschriebenen, erfindungsgemäß ausgebildeten optischen Systeme könnten insbesondere zur Homogenisierung einer Verteilung von Licht, das von einer oder mehreren LEDs emittiert wird, in entsprechenden LED-Leuchten verwendet werden.

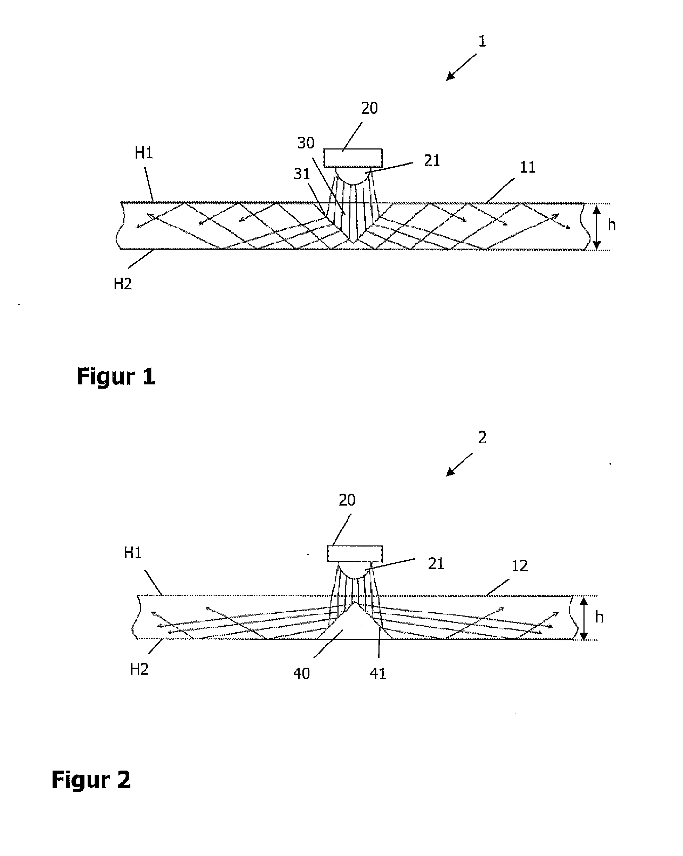

Die in Figur 1 dargestellte erste Ausführungsform zeigt ein optisches System 1 mit einem Flächenlichtleiter 11 aus transparentem Kunststoff, der eine sehr viel geringere Höhe h aufweist im Vergleich zu den (nicht dargestellten) Abmessungen in die beiden dazu senkrechten Richtungen. Bei der in Figur 1 angegebenen Ausführungsform sowie den weiteren, nachfolgend erläuterten Ausführungsformen sind beide Flächen oder Hauptflächen H1, H2 des jeweiligen Flächenlichtleiters eben und parallel zueinander gestaltet.

Im eingebauten Zustand des optischen Systems 1 gemäß Fig. 1 in eine Leuchte ist oberhalb der Fläche H1 eine LED-Einrichtung 20 angeordnet, welche eine Linse 21 aufweist, die das von der lichtemittierenden Schicht der LED ausgehende Licht bündelt und in eine im Flächenlichtleiter eingebrachte Vertiefung 30 richtet, welche durch zumindest eine zugeordnete Begrenzungsfläche 31 festgelegt ist. In dem dargestellten Beispiel der Figur 1 weist diese Vertiefung 30 eine kegelartige Gestalt auf, sodass die zugeordnete Begrenzungsfläche 31 geschlossen ist und die Kegelausnehmung festlegt. Da die Linse 21 halbkugelförmig ausgebildet ist, ist die Vertiefung 30 damit an eine entsprechende Rotationssymmetrie der Lichtquelle angepasst. Auch der Winkel der Begrenzungsfläche 31 zur Fläche H2 ist zur Optimierung des Lichteintrags in den Flächenlichtleiter angepasst.

Wie in Figur 1 angegeben, werden die aus der Linse 21 der LED 20 austretenden Lichtstrahlen an der Begrenzungsfläche 31 beim Eintritt in den Flächenlichtleiter 11 zum Lot hin gebrochen und nachfolgend aufgrund Totalreflexion an beiden Flächen H1, H2 reflektiert, sodass das Licht innerhalb des Flächenlichtleiters 1 gefangen ist. In der beschriebenen Ausführungsform liegt zwischen der Austrittsfläche der Linse 21 und der Begrenzungsfläche 31 des Flächenlichtleiters Luft vor, in anderen Ausführungsformen kann zur Verbesserung der Einkopplung auch mit einem anderen Medium, beispielsweise einer Flüssigkeit mit einem Brechungsindex >1 gearbeitet werden. Letzteres gilt auch für die nachfolgend beschriebenen Ausführungsformen.

Figur 2 zeigt eine weitere Ausführungsform eines erfindungsgemäß ausgebildeten optischen Systems 2, bei welchem als Punktlichtquelle wiederum eine LED-Einrichtung 20 Verwendung findet, bei welcher das Licht über eine Linse 21 nach außen abgestrahlt wird. Im Unterschied zu der in Figur 1 dargestellten Ausführungsform befindet sich hier eine Vertiefung 41 an der Fläche H2, welche der LED 20 abgewandt ist. Diese Vertiefung 40 wird wiederum durch eine kegelförmige Begrenzungsfläche 41 bereitgestellt, welche wie in der erstbeschriebenen Ausführungsform an die halbkugelförmige Gestalt der Linse 21 angepasst ist. Die Steigung der Begrenzungsfläche 41 zur Fläche H2 ist so gewählt, dass das an der Fläche H1 in den Flächenlichtleiter 12 eindringende Licht an der Begrenzungsfläche 41 total reflektiert wird und somit im Flächenlichtleiter 12 verbleibt. In einer nicht dargestellten Ausführungsform kann die Begrenzungsfläche 41 auch spiegelnd beschichtet sein zur Reflexion des Lichtes in das Volumen des Flächenlichtleiters.

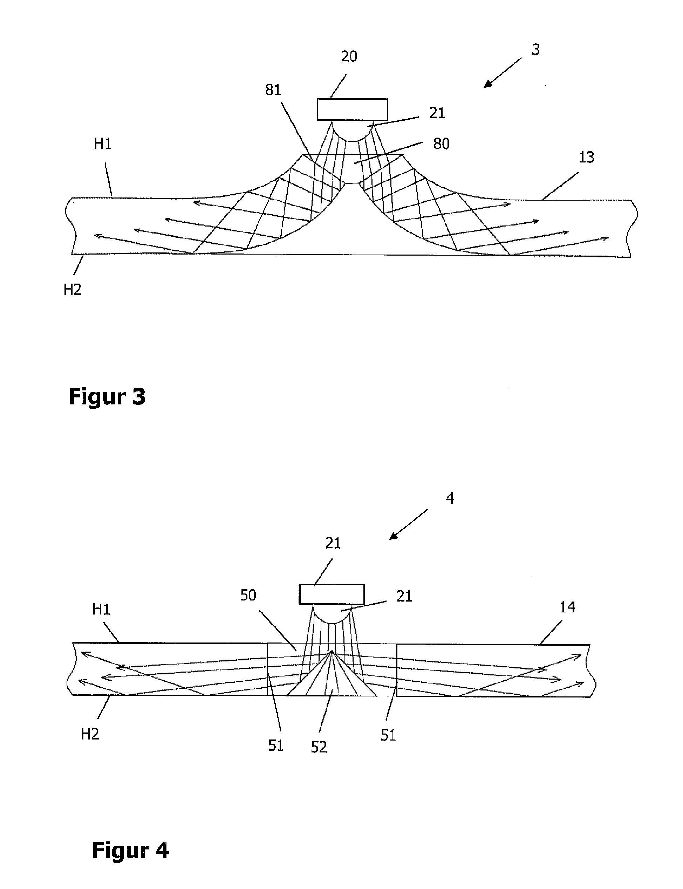

Figur 3 zeigt ein weiteres erfindungsgemäß gestaltetes optisches System 3, bei welchem der Flächenlichtleiter 13 im Bereich der darüber angeordneten LED-Einrichtung 20 eine rotationssymmetrische lokale Erhebung aufweist mit einer kegelförmigen Vertiefung in der Mitte, über deren Begrenzungsfläche das Licht der LED 20 in den Flächenlichtleiter 13 eingekoppelt wird.

Figur 4 zeigt eine weitere Ausführungsform eines erfindungsgemäß gestalteten optischen Systems, bei dem der Flächenlichtleiter 14 eine Ausnehmung wie ein Loch aufweist. In der beschriebenen Ausführungsform ist dieses Loch 50 entsprechend der Rotationssymmetrie der halbkugelförmigen Linse 21 der zugeordneten LED-Einrichtung kreisrund mit einer zylinderförmigen Begrenzungsfläche 51 ausgebildet, wobei ein Spiegelelement in Form eines Reflexionskegels 52 in der Ausnehmung wie in Figur 4 angegeben platziert ist. Dieser Reflexionskegel 52 kann beispielsweise eine Oberfläche aufweisen, die mit einer reflektierenden Beschichtung bedampft ist. In einer hierzu abgewandelten Ausführungsform kann auch vorgesehen sein, dass der Reflexionskegel 52 direkt in den Flächenlichtleiter eingearbeitet ist, ohne dass ein vollständiges Loch im Flächenlichtleiter 14 eingebracht sein muss. In beiden Fällen wird das die LED-Einrichtung 20 über die Linse 21 verlassende Licht an der Mantelfläche des Reflexionskegels 52 reflektiert und an der Begrenzungsfläche 51 in den Flächenlichtleiter 14 eingeführt.

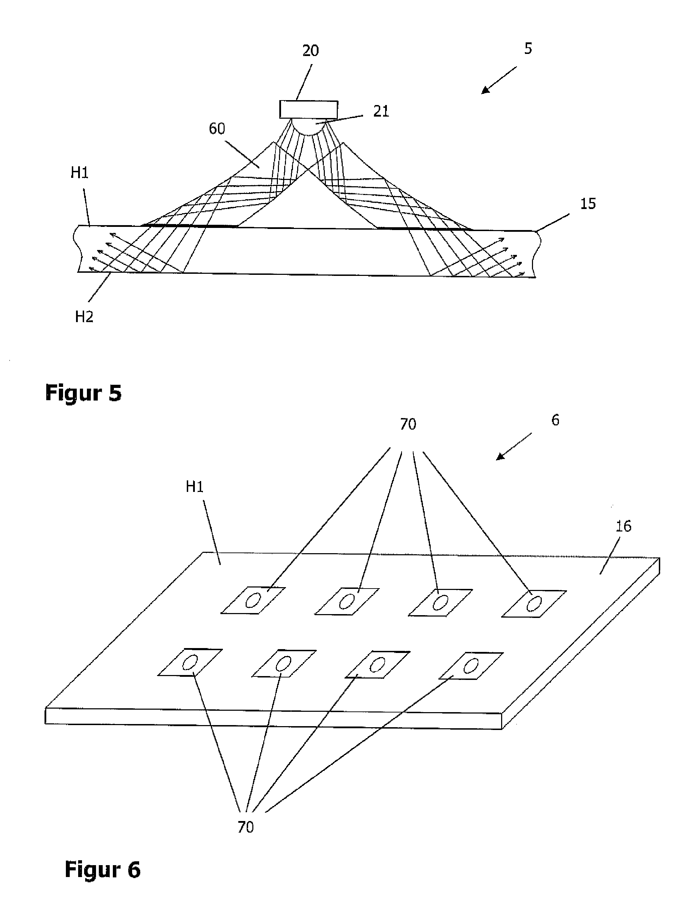

Eine weitere Ausführungsform eines erfindungsgemäß ausgebildeten optischen Systems 5 ist in Figur 5 zusammen mit einer LED-Einrichtung 20 als punktförmige Lichtquelle dargestellt. Zwischen der LED 20 und dem Flächenlichtleiter 15 ist bei dieser Ausführungsform ein Prisma 60 angeordnet, das an der Fläche H1 in optischem Kontakt mit dem Flächenlichtleiter 15 gebracht ist, wobei das Licht der LED-Einrichtung auf der Lichteintrittsseite des Prismas eingeführt wird und auf der gegenüber liegenden Seite über den optischen Kontakt spitzwinklig in den Flächenlichtleiter 15 eintritt.

Figur 6 zeigt eine Ausführungsform eines erfindungsgemäß gestalteten optischen Systems 6, das eingerichtet ist, Licht einer Vielzahl voneinander beabstandeten, beispielsweise reihen- bzw. spaltenförmig oberhalb einer Fläche des Flächenlichtleiters 16 angeordneten punktförmigen und hier nicht dargestellten Lichtquellen in den Flächenlichtleiter 16 einzuführen. Hierzu ist am Lichtleiter für jede der Punktlichtquellen jeweils ein entsprechendes optisches Element 70 vorgesehen, welches das Licht der zugeordneten Punktlichtquelle in den Flächenlichtleiter 16 an der Fläche H1 einführt. Die damit auch reihen- bzw. spaltenförmig am bzw. im Flächenlichtleiter angeordneten optischen Elemente können alle gleich oder auch unterschiedlich aufgebaut sein. Dabei sind grundsätzlich alle der obenstehend angegebenen Arten von optischen Einkoppelelementen zur Einkopplung des Lichtes einsetzbar.

### Bezugszeichenliste

- 1 - 6: Optisches System
- 11 - 16: Flächenlichtleiter
- 20: LED-Einrichtung
- 21: Linse
- 30: Vertiefung
- 31: Begrenzungsfläche
- 40: Vertiefung
- 41: Begrenzungsfläche
- 50: Loch
- 51: Begrenzungsfläche
- 52: Reflexionskegel
- 60: Prisma
- 70: Optisches Element
- 80: Vertiefung
- 81: Begrenzungsfläche
- h: Höhe
- H1, H2: Fläche

## Patentansprüche

1. Optisches System zur Einkopplung von Licht von zumindest einer näherungsweise punktförmigen Lichtquelle wie einer LED in einen Flächenlichtleiter aus transparentem Material wie Glas oder Kunststoff, **dadurch gekennzeichnet, dass** die punktförmige Lichtquelle (20) über einer Fläche des Flächenlichtleiters (11 - 16) angeordnet und dieser ein optisches Element zugeordnet ist, welches das Licht der punktförmigen Lichtquelle an der Fläche des Flächenlichtleiters einkoppelt, wobei das eingekoppelte Licht den Grenzwinkelbedingungen der Totalreflexion genügt und bis zur kontrollierten Auskoppelung im Flächenlichtleiter (11 - 16) verbleibt.

2. Optisches System nach Anspruch 1, **dadurch gekennzeichnet, dass** zur Gestaltung des einkoppelnden optischen Elements in dem Flächenlichtleiter (11) unter der punktförmigen Lichtquelle (20) eine Vertiefung (30) angebracht ist, deren Flächen (31) unter solchen Winkeln stehen, dass das Licht der punktförmigen Lichtquelle durch Brechung an dem optischen Übergang ins Material derart gebrochen wird, dass es ganz oder teilweise der Grenzwinkelbedingung des Flächenlichtleiters genügt und in diesem bis zur Auskopplung verbleibt.

3. Optisches System nach Anspruch 1, **dadurch gekennzeichnet, dass** zur Gestaltung des einkoppelnden optischen Elements in dem Flächenlichtleiter (12) gegenüber der punktförmigen Lichtquelle (20) Vertiefungen (40) angebracht sind, deren Flächen (41) unter solchen Winkeln stehen, das Licht der Punktlichtquelle durch Totalreflexion an dem optischen Übergang oder durch Verspiegelung oder mittels eines zusätzlichen Spiegelelements so in den Flächenlichtleiter reflektiert wird, dass es ganz oder teilweise der Grenzwinkelbedingung des Flächenlichtleiters genügt und in diesem bis zur Auskopplung verbleibt.

4. Optisches System nach Anspruch 1, **dadurch gekennzeichnet, dass** zur Gestaltung des einkoppelnden optischen Elements auf der Fläche (H1) des Flächenlichtleiters (13) lokale Erhebungen ausgestellt sind, die wiederum im Zentrum eine kegelförmige Vertiefung (80) aufweisen, über deren Fläche (81) das Licht der punktförmigen Lichtquelle (20) eingekoppelt ist.

5. Optisches System nach Anspruch 1, **dadurch gekennzeichnet, dass** zur Gestaltung des einkoppelnden optischen Elements in der Fläche des Flächenlichtleiters (14) Öffnungen (50) vorgesehen sind, in denen Spiegelelemente (52) das senkrecht zur Oberfläche einfallende Licht der punktförmigen Lichtquelle so reflektieren, dass das Licht über die Stirnfläche (51) der besagten Öffnung in den Flächenlichtleiter eingekoppelt wird.

6. Optisches System nach Anspruch 1, **dadurch gekennzeichnet, dass** zur Gestaltung des einkoppelnden optischen Elements auf der Fläche des Flächenlichtleiters (15) ein Prisma (60) in optischem Kontakt mit dem Flächenlichtleiter aufgebracht ist derart, dass auf der Lichteintrittsseite des Prismas Licht eingeleitet wird und auf der gegenüber liegenden Seite dieses Licht über den optischen Kontakt spitzwinklig in den Flächenlichtleiter eintritt.

7. Optisches System nach einem der Ansprüche 2 bis 6, **dadurch gekennzeichnet, dass** eine Mehrzahl von punktförmigen Lichtquellen über der Fläche des Flächenlichtleiters (16) angeordnet ist und jeder Punktlichtquelle ein jeweiliges optisches Element (70) zugeordnet ist, welches das Licht der zugeordneten Lichtquelle in die Fläche des Flächenlichtleiters einkoppelt.
